# EUROPEAN PATENT SPECIFICATION

(11) **EP 2 065 168 B1**
(45) Date of publication and mention of the grant of the patent: **18.09.2013**
(21) Application number: 07743132.8
(22) Date of filing: 11.05.2007
(51) Int. Cl.: B29C 65/52, A47L 9/24, B29C 65/80, F16L 11/22, B29L 23/18

(54) **PROCESS, AND APPARATUS, FOR PRODUCING FLEXIBLE HOSE WITH TUBE DISPOSED THEREINSIDE**
VERFAHREN UND VORRICHTUNG ZUR HERSTELLUNG EINES SCHLAUCHS MIT DARIN BEFINDLICHEM ROHR
PROCESSUS ET APPAREIL PERMETTANT DE PRODUIRE UN TUYAU FLEXIBLE DOTÉ D'UN TUBE DISPOSÉ À L'INTÉRIEUR DE CELUI-CI

(30) Priority: 21.09.2006 JP 2006256417; 21.09.2006 JP 2006256411
(43) Date of publication of application: 03.06.2009
(73) Proprietor: Tigers Polymer Corporation, Toyonaka-shi, Osaka 565-0082 (JP)
(72) Inventor: HAYASHI, Tokujiro, Kobe-shi Hyogo 651-2271 (JP); KURATA, Junya, Kobe-shi Hyogo 651-2271 (JP)
(74) Representative: Schoppe, Fritz
(86) International application number: PCT/JP2007/059697
(87) International publication number: WO 2008/035484

(56) References cited:
- EP-B1- 1 011 960
- WO-A2-97/27414
- DE-A1- 10 127 130
- DE-U1- 29 507 806
- JP-A- 06 201 073
- JP-A- 2002 223 998
- JP-A- 2002 223 999
- JP-A- 2003 265 379
- US-A- 3 715 454

## Description

### Technical Field

The present invention relates to a method and an apparatus for producing a flexible hose which is suited to be used for a vacuum cleaner or the like, and more particularly to a method for producing a flexible hose incorporating a tube for circulating exhaust air from a vacuum cleaner to a cleaner nozzle or a tube for encasing a lead wire.

### Background Art

Such a flexible hose is disclosed by, for example, Reference 1 below. Also, Reference 2 below discloses a method for producing such a flexible hose. In the method disclosed by Reference 2, thermoplastic adhesive is applied to a tube, and the tube is inserted into a hose. Then, the hose is entirely crushed so that the hose and the tube can be bonded together. Thus, a flexible hose with a tube incorporated therein can be produced.
Reference 1: JP6-201073A
Reference 2: EP1011960B1

However, there is a problem as described below in the conventional method disclosed by Reference 2. In the conventional method, the tube is inserted into the hose after an adhesive is applied to the tube, and therefore, there is a time lag between the time of applying an adhesive to the tube and the time of bonding the tube to the hose. Especially concerning the end of the tube with which the application of adhesive starts, the time lag is large. In the method, therefore, it is likely that the adhesive for the bonding is limited to a kind with a long pot life so that the end of the tube can be bonded to the hose securely. The kind of adhesive with a long pot life generally has low heat resistance. Consequently, in the conventional method, the kind of adhesive with relatively low heat resistance is used, and it is difficult to produce a hose with high heat resistance.

Also, in the method disclosed by Reference 2, because of the shape of a jig for inserting the tube into the hose and because of the way of boding the tube to the hose, that is, the step of crushing the hose, the form of bonding the tube inside the hose is restricted only to a straight line.

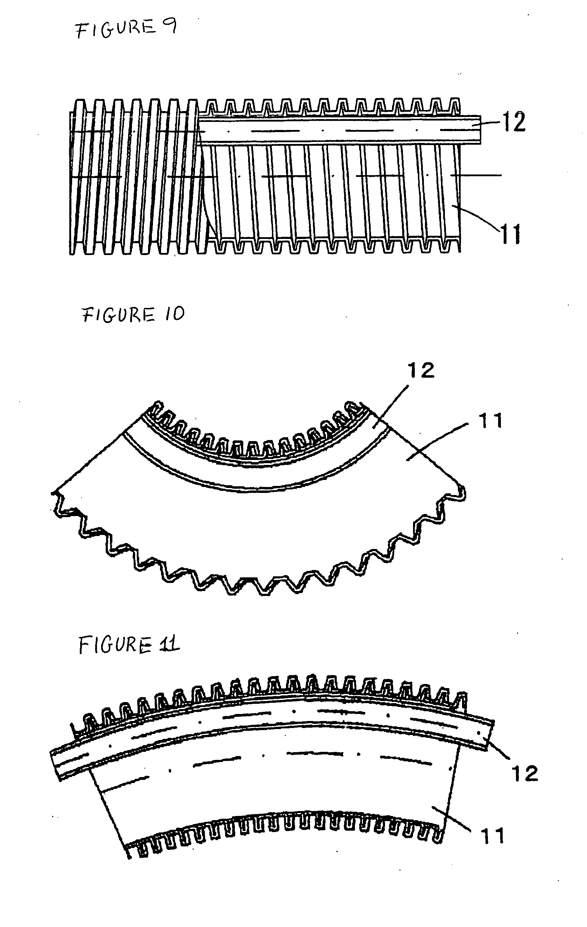

According to Reference 1, a tube 12 is incorporated in a hose 11 with a wall in the shape of bellows as shown by Fig. 9, and the bellows in the part where the tube 12 is bonded become poor in expansibility. Therefore, it is hard to bend the hose in a direction where the part with the tube bonded thereto will be a side with a smaller radius of curvature (see Fig. 10). Further, it is harder to bend the hose in a direction where the part with the tube bonded thereto will be a side with a larger radius of curvature (see Fig. 11).
For example, when the flexible hose is used for a vacuum cleaner, however, it is desired that the part of the hose near the body of the vacuum cleaner bend to the right, to the left and upward (in the direction shown by Fig. 10) easily, and it is desired that the part near the handgrip of the vacuum cleaner bend to the right, to the left and downward (in the direction shown by Fig. 11) easily. The conventional flexible hose incorporates a straight tube inside and therefore has a problem of not bending easily in any of the directions described above, which makes it hard to handle the hose and the vacuum cleaner.

There is such a problem when the flexible hose with a tube is used for other purposes as well as for a vacuum cleaner. Whatever the flexible hose is used for, the directions in which the hose bends easily are limited due to the bonding position of the tube.

WO 9727414 A2 describes a hose combination with a first and at least one other hose which is secured along a common line of contact to the inside of the wall of the first hose. In order substantially to reduce the flow resistance which may be caused by the other hose in the first one, the first hose widens uniformly from one end to the other, i.e. from its intake to its discharge.

DE 101 27 130 A1 describes a combination hose having a heat setting adhesive applied to the inner hose surface as a strand with an embedded electrical resistance heater to activate the adhesive and bond the inner hose to the inner surface of the outer hose. To produce a combined hose structure, with an outer hose and an inner hose, a heat setting adhesive is applied in a longitudinal line along the inner hose. The inner hose is inserted into the outer hose so that the adhesive is in contact with the inner surface of the outer mantle. An electrical heating resistance is embedded in the adhesive strand to activate it and form an adhesive bond when required.

US 3,715,454 A describes an elongated differential fluid pressure formed flexible hose having an inner portion defined by a plurality of spaced tubular segments interconnected by a plurality of integral convolutions which extend outwardly from the segments. The convolutions have a plurality of recesses therein arranged in aligned relation to define at least one groove which extends the full length of the hose. A flexible hose-reinforcing member is arranged in each groove and attached to the hose along its full length.

EP 0 742 399 A2 describes a suction hose having at least one incorporated current conductor contained within a flexible sleeve, secured via an adhesive layer to the inside wall of the suction hose and extending parallel to its axis. The flexible sleeve has an associated tension restraint element extending between the opposite ends of the sleeve.

### Summary of the Invention

An object of the present invention is to provide a tube-incorporated flexible hose in which a tube is securely bonded to an inner surface of a flexible hose, and to provide a hose production method which permits a tube to be bonded to an inner surface of a hose in a desired shape as well as in a straight line and which permits a tube bonding position with respect to a circumferential direction of the hose to be controlled freely through an entire length of the hose.
This object is achieved a method of claim 1, and by an apparatus of claim 4.

The present invention relates to a method for producing a flexible hose with a tube inserted and bonded therein. In the method, a bonding nozzle unit, which can continuously execute a first step of applying an adhesive to an inner surface of the hose or to an outer surface of the tube and a second step of pressing the tube against the hose so as to bond the tube to the hose, is inserted in the hose. Then, the bonding nozzle unit executes the first step and the second step to bond the tube to the hose while moving in relative to the hose from one end to the other end of the hose (claim 1).

In the method, the bonding nozzle unit and the tube may be inserted in the hose concurrently, and thereafter, while only the bonding nozzle unit is coming out of the hose, the bonding nozzle unit may eject an adhesive through a nozzle orifice formed in an end portion of the bonding nozzle unit and may press the tube against the hose with a tube pressing means provided in the end portion of the bonding nozzle unit (claim 2).

In the method according to claim 1, while the bonding nozzle unit is moving in relative to the hose in a direction along an axis of the hose, the hose may be rotated on its axis in relative to the bonding nozzle unit, so that a tube bonding position in a circumferential direction of the hose will vary as a position in a length direction of the hose varies (claim 3).

The present invention also relates to an apparatus for producing a flexible hose with a tube inserted and bonded therein. The apparatus comprises: a bonding nozzle unit which can be inserted in a hose and which comprises, in an end portion, a tube pressing means for pressing a tube against an inner surface of the hose and a nozzle orifice through which an adhesive is ejected; a clamp for holding the hose; and a relative movement mechanism for moving the bonding nozzle unit and the clamp in a direction along an axis of the hose in relative to each other (claim 4).

The apparatus may further comprise a tube holding means for holding a tube to the bonding nozzle unit temporarily, and the tube pressing means may be located closer to an end of the bonding nozzle unit which is a leading end when the bonding nozzle unit is inserted into the hose than the nozzle orifice (claim 5).

The apparatus may further comprise: a relative rotation mechanism for rotating the clamp for holding the hose and the bonding nozzle unit around the axis of the hose in relative to each other; and a relative rotation controller for controlling the relative rotation of the clamp and the bonding nozzle unit while the bonding nozzle unit and the clamp are moving in the direction along the axis of the hose in relative to each other (claim 6).

### Effect of the Invention

The method and the apparatus according to the present invention permit bonding of a tube to a hose to be executed immediately after application of an adhesive on an outer surface of the tube or on an inner surface of the hose, and the bonding of the tube to the hose is highly reliable. Also, it is possible to use thermoplastic adhesive with a short pot life and high heat resistance so as to obtain a high heat-resistant flexible hose.

The present invention may bring secondary effect as described below. In the method and the apparatus according to the present invention, since the tube and the hose are pressed immediately after application of thermoplastic adhesive, there is no fear that the adhesive may solidify before the bonding step, and the adhesive spreads out well. Therefore, even with a small amount of adhesive, the hose and the tube can be bonded securely. Further, if only a small amount of adhesive is used, there is no fear that the high-temperature adhesive may cause damage to the tube and/or the hose (may melt the tube and/or the hose).

In the inventive method and the inventive apparatus, at any portion in the entire length of the hose, the lag between the time of applying an adhesive and the time of pressing the tube is constant. In the entire length of the hose, the bonding of the tube to the hose can be performed under same conditions, and accordingly, the tube can be bonded to the hose with even strength in the entire length.

Further, in the method as claimed in claim 3 and the apparatus as claimed in claim 6, the bonding position of the tube in the circumferential direction of the hose can be controlled.

### Brief Description of the Drawings

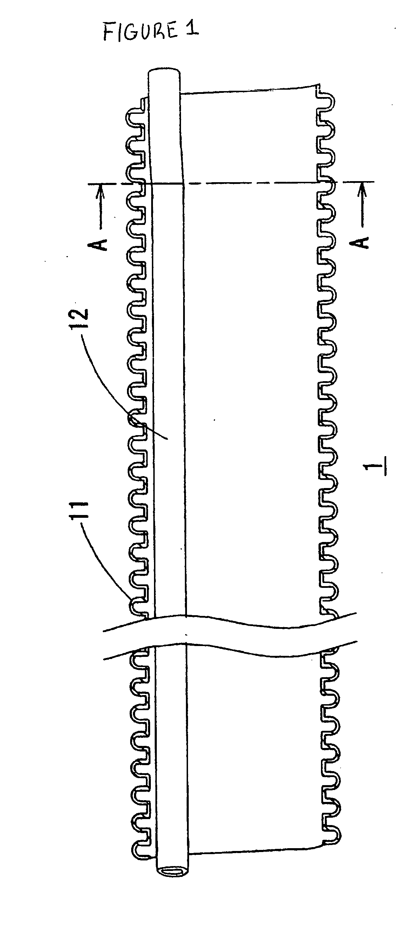

Fig. 1 is a sectional view of a flexible hose produced by a method and an apparatus according to a first embodiment of the present invention.

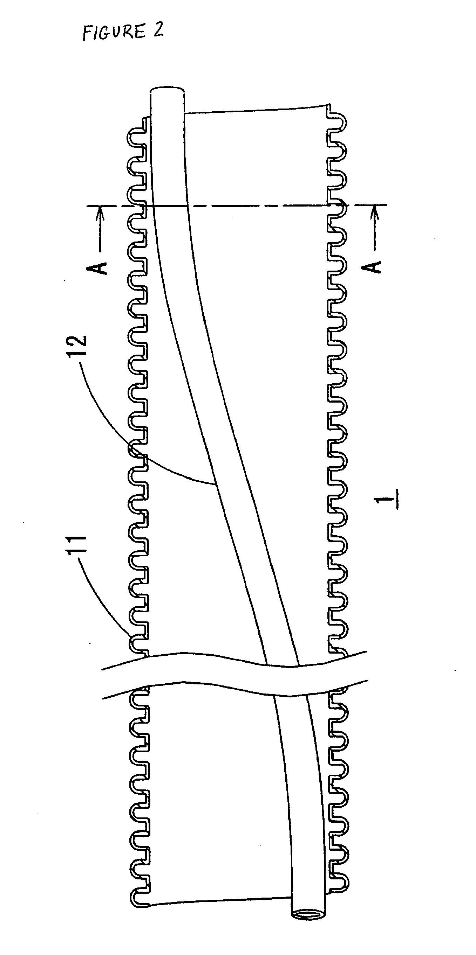

Fig. 2 is a sectional view of a flexible hose produced by a method and an apparatus according to a second embodiment of the present invention.

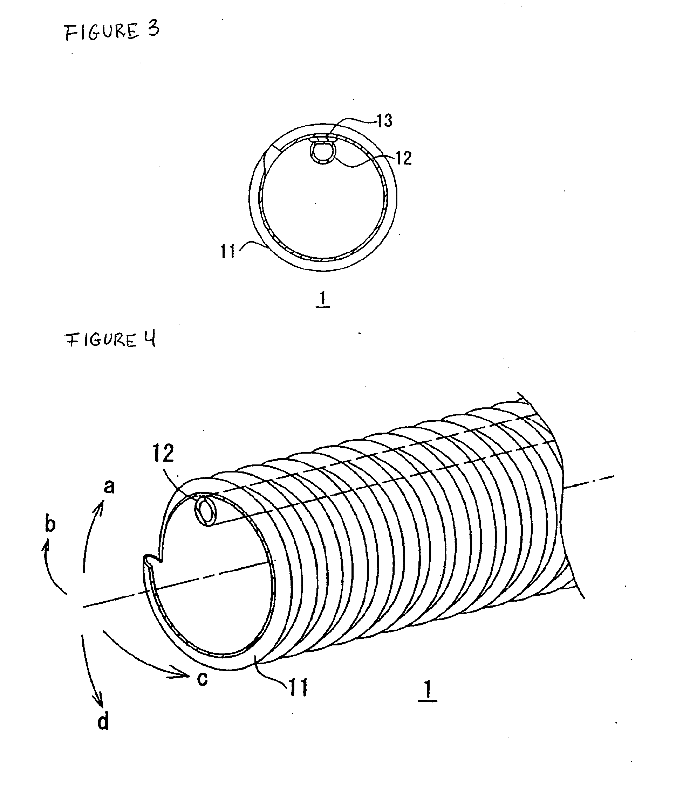

Fig. 3 is a cross sectional view of the flexible hose shown by Fig. 1, taken along the line A-A in Fig. 1.
Fig. 4 is a perspective view of a part of a flexible hose produced by a method and an apparatus according to the present invention.

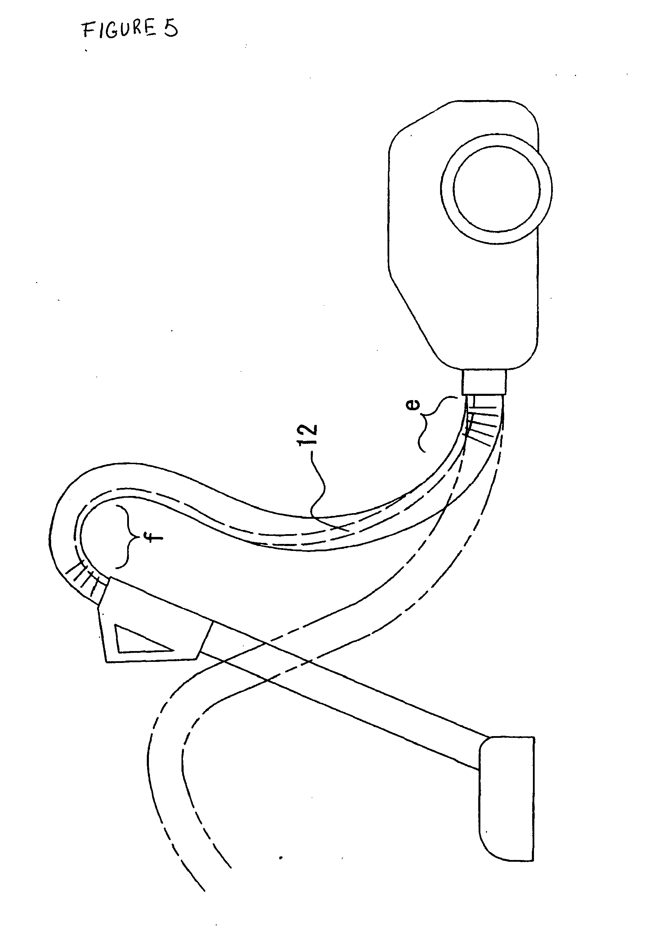

Fig. 5 is an illustration showing an example of using a flexible hose produced by a method and an apparatus according to the present invention for a vacuum cleaner.

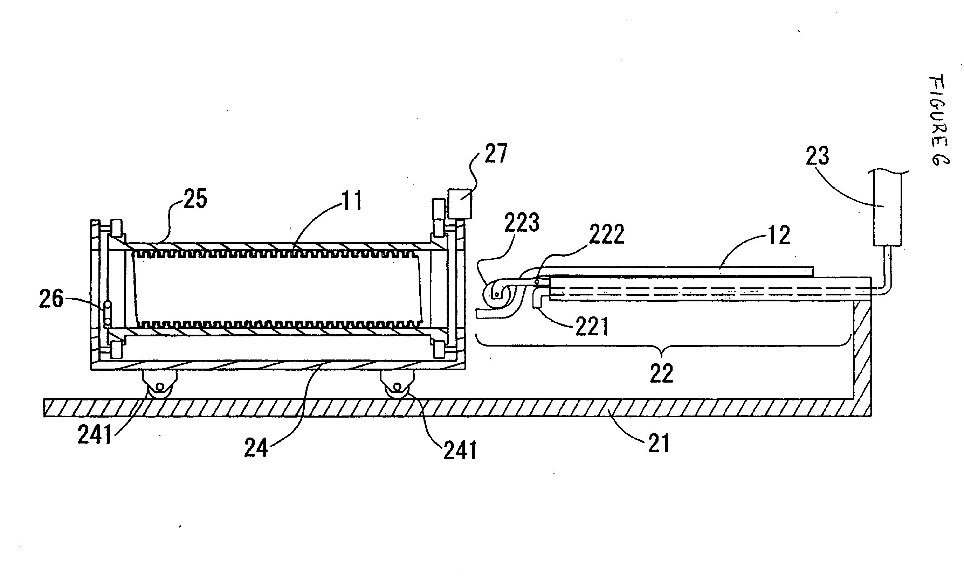

Fig. 6 is an illustration showing a setting stage of a flexible hose producing method according to the present invention.

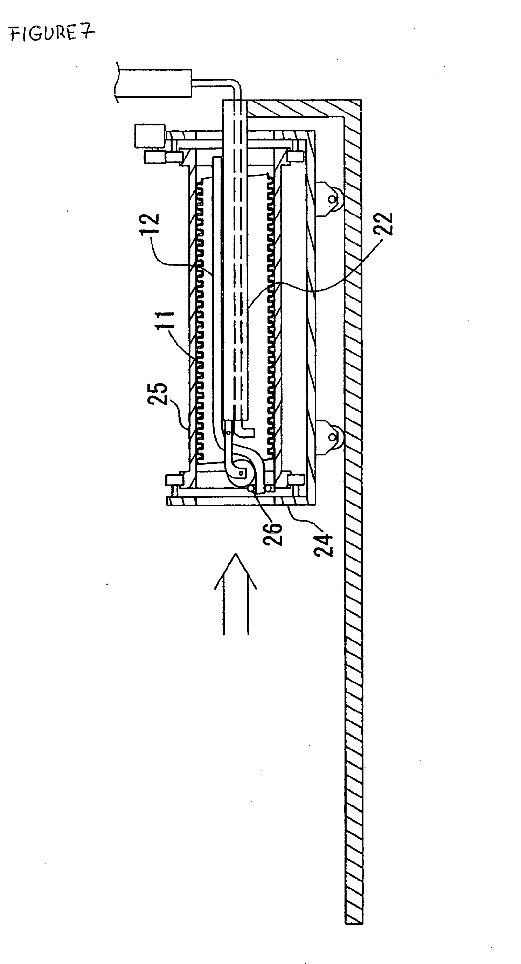

Fig. 7 is an illustration showing an insertion stage of the flexible hose producing method according to the present invention.

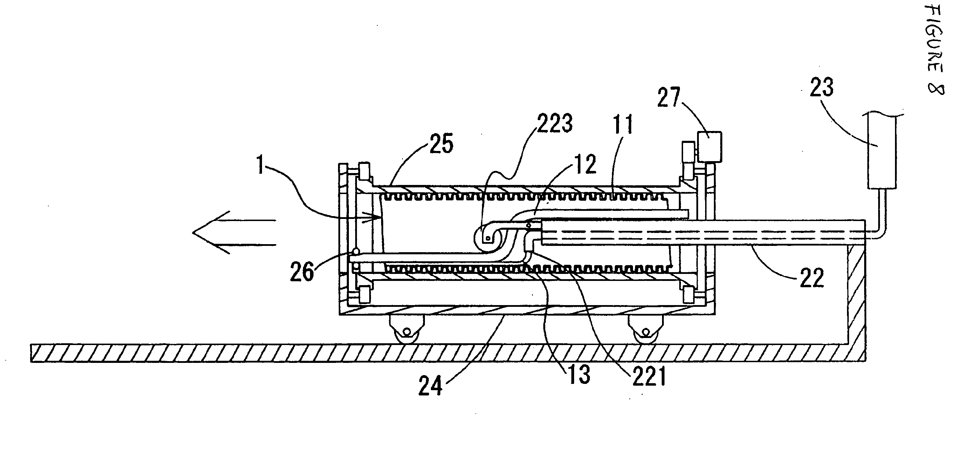

Fig. 8 is an illustration showing a take-out stage of the flexible hose producing method according to the present invention.
Fig. 9 is a fragmentary view of a conventional tube-incorporated flexible hose.
Fig. 10 is a sectional view of a part of the conventional tube-incorporated flexible hose while the flexible hose is bent in a direction where the part with the tube bonded thereto will be a side with a smaller radius of curvature.
Fig. 11 is a sectional view of a part of the conventional tube-incorporated flexible hose while the flexible hose is bent in a direction where the part with the tube bonded thereto will be a side with a larger radius of curvature.

### Description of Reference Symbols

1: flexible hose
- 11:: hose
- 12:: tube
- 13:: adhesive
- 21:: base
- 22:: bonding nozzle unit
- 221:: nozzle orifice
- 222:: guide roller
- 223:: pressing roller
- 23:: injection molding machine
- 24:: dolly
- 241:: wheel
- 25:: rotary clamp
- 26:: tube clamp
- 27:: rotation controller

### Best Modes for Carrying out the Invention

Embodiments of the present invention are hereinafter described with reference to the drawings.

First, the structure of a tube-incorporated flexible hose 1 produced by a method and an apparatus according to the present invention is described. Fig. 1 is a sectional view of the hose 1. A tube 12 extends straight inside a flexible hose 11 and is bonded to the inner surface of the flexible hose 11. The wall of the hose 11 is in the shape of bellows, so that the hose 11 is flexible. According to the present invention, further, a tube-incorporated flexible hose with a gradual spiral tube 12 bonded inside the hose 11 can be produced. Specifically, as shown by Fig. 2, a tube-incorporated flexible hose in which the tube 12 half spirals inside the hose 11 such that the circumferential bonding positions of the tube 12 at both ends of the hose 11 are at an angle of 180 degrees to each other can be produced.

Fig. 3 is a cross sectional view of the hose 1, taken along the line A-A in Fig. 1. The tube 12 is bonded to the inner surface of the flexible hose 11 by thermoplastic adhesive 13. The flexible hose 11 may be a hose which is produced by a conventional blow molding method or a spiral molding method. The spiral molding method is to extrude a strip, to wind the strip spirally and to bond the spiral strip. The flexible hose 11 may have a reinforcement made of hard resin or steel on a wall of soft resin. The tube 12 is flexible enough not to degrade the flexibility of the hose 11 remarkably. The wall of the tube 12 may be flat as shown in Fig. 1 or may be in the shape of bellows if necessary.

In this embodiment, the hose 11 and the tube 12 are made of copolymer resin containing polyethylene resin and ethylene vinyl acetate resin (EVA resin), and the adhesive 13 is melted copolymer resin containing polyethylene resin and ethylene vinyl acetate resin (EVA resin).

The tube 12 and the flexible hose 11 may be made of other soft resin materials. For example, soft vinyl chloride resin, olefine resin (polypropylene resin, polyethylene resin, EVA resin, etc.) urethane resin, thermoplastic elastomer (olefine thermoplastic elastomer, styrene thermoplastic elastomer, denaturated styrene thermoplastic elastomer, etc.) and mixtures of these kinds of resin can be used.

There are no particular limitations to the adhesive 13, as long as the adhesive 13 has such an adhesive strength enough to bond the tube 12 and the hose 11 together and has adequate flexibility. In this embodiment, however, the adhesive 13 is preferably thermoplastic adhesive. In this case, melted adhesive is coated on either the tube 12 or the hose 11, and by pressing the tube 12 and the hose 11 against each other, bonding is completed immediately. Therefore, so-called hot melt adhesive on the market may be used, or otherwise, thermoplastic adhesive which is soluble with the material of the tube 12 or the material of the hose 11 may be used. In this embodiment, the tube 12 and the hose 11 are made of the same material, and therefore, the adhesive 13 can be selected from a wide range of materials. Further, if the adhesive 13 is of the same material as the tube 12 and the hose 11, the boding will be more secure.

Fig. 4 is a schematic view of a part of the tube-incorporated flexible hose 1 produced by a method and an apparatus according to the present invention. The hose 1 has a tube 12 bonded to an upper side of a hose 11, and with this structure, the hose 1 bends easily in some directions but does not bend easily in other directions. Specifically, the tube 12 does not prevent the hose 1 from bending to the right and to the left (in the directions "b" and "c" shown in Fig. 4). However, because the bellows of the hose 11 around the portion where the tube 12 is bonded have poor expansibility, it is not easy to bend the hose 1 in the direction "a", wherein the tube 12 is positioned in a side of a smaller radius of curvature, and further, it is harder to bend the hose 1 in the direction "d", wherein the tube 12 is positioned in a side of a larger radius of curvature.

Fig. 5 shows an example of using a tube-incorporated flexible hose 1 produced by a method and an apparatus according to the present invention for a vacuum cleaner. In this example, as shown by Fig. 2, the tube 12 is bonded to the hose 11 such that the circumferential bonding positions of the tube 12 to the hose 11 at both ends of the hose 1 are at an angle of 180 degrees to each other. Further, the flexible hose 1 is fitted to the vacuum cleaner such that the tube 12 is located on the upper side of the hose 11 at an end portion "e" near the body of the vacuum cleaner and is located on the lower side of the hose 11 at the other end portion "f" near the handgrip of the vacuum cleaner. With this arrangement, a user can bend the flexible hose 1 easily, both near the body of the vacuum cleaner and near the handgrip of the vacuum cleaner, in necessary directions, and thus, the vacuum cleaner is easy to handle. In a case of using the flexible hose 1 for a vacuum cleaner, this example is the best. The use of the flexible hose 1 is not limited to a use for a vacuum cleaner. The flexible hose 1 is for general purpose and may be used as a hose for water or any other liquid. Also, the use of the tube 12 is not limited to a use as a tube for circulation of exhaust air and a use as a case for a lead wire, and the tube 12 may be used as a tube for detergent and any other liquid.

Next, a method and an apparatus for producing a flexible hose according to the present invention are described. Figs. 6, 7 and 8 show a series of processes carried out in the inventive method to bond the tube 12 to the inner surface of the hose 11.

An apparatus as shown by Fig. 6 is an apparatus for producing a tube-incorporated flexible hose 1. On a base 21 of the apparatus, a substantially cylindrical bonding nozzle unit 22 is fitted. Melted thermoplastic adhesive is supplied from an injection-molding machine 23 into a nozzle, and the adhesive is dispensed through a nozzle orifice 221 located in an end portion of the bonding nozzle unit 22. Since a high-temperature melted adhesive flows in the nozzle, the nozzle is insulated by a heat insulator. The temperature of the nozzle may be regulated by introducing water, air or any other adequate medium into the nozzle.

In an end portion of the bonding nozzle unit 22, not only the nozzle orifice 221 for ejection of the adhesive but also a guide roller 222 and a pressing roller 223 are provided. In the process of bonding the tube 12 to the inner surface of the hose 11, the pressing roller 223 presses the tube 12 down to the inner surface of the hose 11. The guide roller 222 guides the tube 12 smoothly to the pressing roller 223. In this embodiment, the pressing roller 223 is located closer to the very end of the bonding nozzle unit 22 than the nozzle orifice 221. Further, for the purpose of smooth enter/retreat into/from the hose 11, the boding nozzle unit 22 may have additional guide rollers or other members in the end portion. The nozzle orifice 221 is located in a position to face close to the inner surface of the hose 11 when the bonding nozzle unit 22 is positioned in the hose 11.

On an upper surface of the bonding nozzle unit 22, a groove (not shown) is formed to hold the tube 12 temporarily. The member for holding the tube 12 is not necessarily a groove, and in order to hold the tube 12, a clamp, a pipe, a ring, a guide or the like may be attached to the bonding nozzle unit 22. In a case in which the bonding nozzle unit 22 and the tube 12 are inserted into the hose 11 separately through mutually opposite ends of the hose 11, as will be described later, the bonding nozzle unit 22 does not need to hold the tube 12 and, therefore, does not require a temporary holder for the tube 12, such as a groove, a clamp or the like.

A dolly 24 is set to be movable by wheels 241 on the base 21 in a direction in which the bonding nozzle unit 22 extends. A rotary clamp 25 is fitted onto the dolly 24, and the rotary clamp 25 can be rotated on its axis, which extends in the extending direction of the bonding nozzle unit 22, by a relative rotation mechanism. The rotary clamp 25 can therein hold and fix the hose 11 with a specified length. By moving the dolly 24 toward the bonding nozzle unit 22 with the hose 11 held and fixed in the rotary clamp 25, the bonding nozzle unit 22 with the tube 12 held thereon is inserted into the hose 11. Also, by moving the dolly 24 in the opposite direction, the bonding nozzle unit 22 is taken out of the hose 11 held in the rotary clamp 25.

In this apparatus, the axis of the hose 11 and the rotary axis of the rotary clamp 25 substantially match with each other, and the hose 11 can be rotated on its axis. In order to hold and fix the hose 11 in the rotary clamp 25, a mechanism of any type may be used, and for example, a mechanism for nipping the hose 11, a mechanism for sucking the hose 11 by air pressure, etc. can be used. As mentioned, the rotation of the rotary clamp 25 on the dolly 24 is executed by the relative rotation mechanism, and the angle of rotation is controlled by a rotation controller 27. Thereby, the angle of rotation of the rotary clamp 25 and the hose 11 in relative to the bonding nozzle unit 22 can be freely set by the rotation controller 27. At an end of the rotary clamp 25 opposite the end facing the bonding nozzle unit 22, a tube clamp 26 for clamping the tube 12 is provided.

Referring to Figs. 6, 7 and 8, a series of processes for bonding the tube 12 to the inner surface of the hose 11 by use of the above-described producing apparatus is described. First, a series of processes for producing a tube-incorporated hose 1 with a tube 12 bonded to the inner surface of the hose 11 in a straight line (as shown by Fig. 1) is described.

Fig. 6 shows a process of setting the hose 11 and the tube 12 in the producing apparatus. First, the bonding nozzle unit 22 and the dolly 24 are positioned separately from each other. Then, a flexible hose 11 with a specified length is set in a specified position in the rotary clamp 25 and held and fixed in the rotary clamp 25. A tube with a specified length is set in the groove formed on the upper surface of the bonding nozzle unit 22. At this moment, an end of the tube 12 is inserted between the guide roller 222 and the pressing roller 223.

Fig. 7 shows a process of inserting the bonding nozzle unit 22 and the tube 12 into the hose 11. The dolly 24 is moved from the position shown by Fig. 6 toward the bonding nozzle unit 22, so that the bonding nozzle unit 22 and the tube 12 come in the hose 11. Then, the end of the tube 12 is fixed by the tube clamp 26 provided on the rotary clamp 25, and thereby, the tube 12 is prevented from moving in relative to the rotary clamp 25. The tube clamp 26 may be a clip which nips the tube 12. The tube clamp 26 may be of any type, such as a needle, a hook, etc. as long as it can hold an end of a tube. Also, the tube clamp 26 is not indispensable, and if bonding of the tube 12 can be carried out well even without the tube clamp 26, the tube clamp 26 is not necessary.

Fig. 8 shows a process of pulling the bonding nozzle unit 22 out of the hose 11 while bonding the tube 12 to the inner surface of the hose 11. While the melted adhesive 13 is being supplied from the injection molding machine 23 and ejected though the nozzle orifice 221, the dolly 24 is moved in the direction separating from the bonding nozzle unit 22. With the movement of the dolly 24, the melted thermoplastic adhesive 13 is ejected through the nozzle orifice 221 and applied onto the inner surface of the hose 11. Thereafter, the tube 12 is placed on the applied adhesive 13 immediately, and subsequently, the tube 12 is pressed against the inner surface of the hose 11 by the pressing roller 223. When the tube 12 is pressed upon the melted adhesive 13 applied on the inner surface of the hose 11, the adhesive 13 spreads out and thereafter, cools down and solidifies, and consequently, the adhesive 13 bonds and incorporates the tube 12 into the hose 11.

Bonding of the tube 12, which is composed of application of an adhesive and pressing of a tube, is executed continuously from an end (left end in Fig. 8) of the hose 11 to the other end (right end in Fig. 8) while the bonding nozzle unit 22 is coming out of the hose 11. Thereby, bonding of the tube into the hose 11 is completed.

In the above-described case, the rotary clamp 25 is controlled not to rotate in relative to the dolly 24, and thereby, the tube 12 is bonded and incorporated into the hose 11 in a straight line. Consequently, the tube-incorporated flexible hose 1 as shown by Fig. 1 is produced. After completion of the bonding, the tube clamp 26 and the rotary clamp 25 are opened, and the flexible hose 1 is discharged from the apparatus.

The discharge of the adhesive 13 from the nozzle orifice 221 needs not be performed continuously. The adhesive 13 may be discharged intermittently, and other modifications are possible as long as the modifications do not lower the adhesive strength and other factors.

The pressing roller 223 presses the tube 12 against the hose 11, and preferably, a spring or the like is provided for the pressing roller 223 so that the pressing force of the roller 223 will be adjustable. Also, the elasticity of the tube 12 may be used as pressing force. The means of pressing the tube 12 is not limited to a roller, and any other type of pressing means may be used to press the tube 12 against the hose 11. For example, a pressing plate which slides on the tube 12 may be used.

Next, a method for producing a tube-incorporated flexible hose 1 as shown by Fig. 2, in which the bonding position of the tube 12 to the hose 11 in the hose circumferential direction varies as the position in the hose length direction varies, is described.

The method is basically the same as the method for producing a tube-incorporated flexible hose as described above, in which the tube 12 is bonded in a straight line, but there are differences as follows. In order to produce a tube-incorporated flexible hose as shown by Fig. 2, the rotation controller 27 controls the rotation angle of the rotary clamp 25 so that the rotation angle of the rotary clamp 25 to the dolly 24 changes as the dolly 24 moves. More specifically, in the process of pulling the bonding nozzle unit 22 out of the hose 11 (see Fig. 8), the rotation angle of the rotary clamp 25 is controlled such that the rotary clamp 25 will be rotated by 180 degrees from the start of a movement of the dolly 24 to the end of the movement of the dolly 24. Thereby, the bonding positions of the tube 12 in the hose circumferential direction at both ends of the hose 1 are at an angle of 180 degrees to each other, and a tube-incorporated flexible hose with a gradual half-spiral tube bonded therein is produced.

The control of the rotation of the rotary clamp 25 can be carried out as a feedback control. For example, a sensor for detecting the travel of the dolly 24 is provided, and a feedback control is executed while a rotation position of the rotary clamp 25 expressed by a function of the travel of the dolly 24 is set as a target. Also, it is possible to execute a sequence control of rotation of the rotary clamp 25 in relative to movement of the dolly 24. Otherwise, it is possible to provide a mechanism composed of gears and cams for permitting the rotary clamp 25 to rotate in relative to movement of the dolly 24. Thus, the control of the rotation angle of the rotary clamp 25 is a concept including not only electronic and electric control methods but also mechanical control methods.

In the embodiments above, the tube 12 is inserted in the hose 11 temporarily held by the bonding nozzle unit 22, and the tube 12 is bonded to the hose 11 while the bonding nozzle unit 22 is being taken out of the hose 11. However, the way of bonding the tube 12 to the hose 11 is not limited to the way described above. For example, the bonding nozzle unit 22 without holding the tube 12 is inserted in the hose 11 through an end of the hose 11, and the pressing roller 223 pierces the hose 11 and comes out of the hose 11 through the other end of the hose 11. Then, an end portion of the tube 12 is wound around the pressing roller 223 from the opposite side to the bonding nozzle unit 22 and clamped in the tube clamp 26. Thereafter, while the bonding nozzle unit 22 is taken out of the hose 11, the adhesive 13 is applied, and the tube 12 is pulled in the hose 11. In this way, the tube-incorporated flexible hose 1 can be produced. Also, modifications to the positions of the pressing roller 223 and the nozzle orifice 221 may be made such that the bonding of the tube 12 to the hose 11 will be performed not while the bonding nozzle unit 22 is being taken out of the hose 11 but while the bonding nozzle unit 22 is being inserted in the hose 11. In this case, specifically, the nozzle orifice 221 is located closer to the very end (leading end when the bonding nozzle unit 22 comes into the hose 11) of the bonding nozzle unit 22 than the pressing roller 223.

In the embodiments above, the hose 11 is mounted on the dolly 24 and is moved to the bonding nozzle unit 22. However, the hose 11 and the rotary clamp 25 may be fixed in relative to the base 21, while the bonding nozzle unit 22 may be moved in relative to the base 21. In short, the hose 11 and the bonding nozzle unit 22 are movable along the axis of the hose 11 in relative to each other, and the bonding nozzle unit 22 can be inserted in the hose 11.

Also, in the embodiments above, the hose 11 is rotated by the rotary clamp 25. However, the hose 11 needs not be always rotated, and instead, the bonding nozzle unit 22 and the tube 12 temporarily held thereon may be rotated. In short, the hose 11 and the bonding nozzle unit 22 are capable of rotating on the axis of the hose 11 in relative to each other.

Concerning the bonding position of the tube 12 to the hose 11 in the hose circumferential direction, the tube 12 needs not be bonded straight as shown by Fig. 1 and needs not be bonded half spirally as shown by Fig. 2. It is possible to bond the tube 12 such that the tube 12 will make an S curve or will be a spiral with a plural number of revolutions. If a lead wire is to be inserted in the tube 12, for the purpose of facilitating insertion and retreat of the lead wire, the tube 12 is preferably bonded such that the tube 12 will not slant largely from the axis of the hose 11. When the tube 12 is bonded spirally, the spiral of tube 12 is preferably gradual and is composed of at most three revolutions.

When a lead wire is placed in the tube 12, the lead wire may be inserted in the tube 12 either before or after the bonding of the tube 12 to the hose 11.

In the embodiments above, the adhesive 13 is applied to the hose 11. However, the present invention does not limit the application of the adhesive 13 to the embodiments above, and the adhesive 13 may be applied to the tube 12. In this case, if the nozzle orifice 221 for ejection of the adhesive 13 is so modified as to face close to the tube 12, the adhesive 13 can be applied to the tube 12 securely. When the wall of the tube 12 is thicker than the wall of the hose 11, it is better to apply the adhesive 13 to the tube 12. Thereby, trouble, such as thermal deformation of the thin wall of the hose 11 due to the heat of the adhesive 13, can be avoided.

### Industrial Applicability

The present invention permits production of a tube-incorporated flexible hose wherein a tube is bonded with high reliability. The tube-incorporated flexible hose produced by a method and an apparatus according to the present invention can be used for a vacuum cleaner, a washing machine, a blower, a conveyer, etc.

## Claims

1. A method for producing a tube-incorporated flexible hose (11) with a tube (12) inserted and bonded in a hose (1),
wherein a bonding nozzle unit (22), which is capable of continuously executing a first step of applying an adhesive (13) to an inner surface of the hose (1) or to an outer surface of the tube (12) and a second step of pressing the tube (12) against the hose (1) so as to bond the tube (12) to the hose (1), is inserted in the hose (1); and
wherein the bonding nozzle unit (22) executes the first step and the second step to bond the tube (12) to the hose (1) while moving in relative to the hose (1) from one end to the other end of the hose (1).

2. A method according to claim 1, wherein the bonding nozzle unit (22) and the tube (12) are inserted in the hose (1) concurrently, and thereafter, while only the bonding nozzle unit (22) is coming out of the hose (1), the bonding nozzle unit (22) ejects an adhesive (13) through a nozzle orifice (221) formed in an end portion of the bonding nozzle unit (22) and presses the tube (12) against the hose (1) with a tube pressing means (222) provided in the end portion of the bonding nozzle unit (22).

3. A method according to claim 1, wherein while the bonding nozzle unit (22) is moving in relative to the hose (1) in a direction along an axis of the hose (1), the hose (1) is rotated on its axis in relative to the bonding nozzle unit (22), so that a tube bonding position in a circumferential direction of the hose (1) varies as a position in a length direction of the hose (1) varies.

4. An apparatus for producing a tube-incorporated flexible hose (11) with a tube (12) inserted and bonded in a hose (1), said apparatus comprising:
a bonding nozzle unit (22) which can be inserted in a hose (1) and which comprises, in an end portion, a tube pressing means (222) for pressing a tube (12) against an inner surface of the hose (1) and a nozzle orifice (221) through which an adhesive (13) is ejected;
a clamp (25) for holding a hose (1); and
a relative movement mechanism for moving the bonding nozzle unit (22) and the clamp (25) in a direction along an axis of the hose (1) in relative to each other.

5. An apparatus according to claim 4, further comprising a tube holding means for holding a tube (12) to the bonding nozzle unit (22) temporarily,
wherein the tube pressing means (222) is located closer to an end of the bonding nozzle unit (22) which is a leading end when the bonding nozzle unit (22) is inserted into the hose (1) than the nozzle orifice (221).

6. An apparatus according to claim 4, further comprising a relative rotation mechanism for rotating the clamp (25) for holding the hose (1) and the bonding nozzle unit (22) around the axis of the hose (1) in relative to each other; and
a relative rotation controller (27) for controlling the relative rotation of the clamp (25) and the bonding nozzle unit (22) while the bonding nozzle unit (22) and the clamp (25) are moving in the direction along the axis of the hose (1) in relative to each other.

## Patentansprüche

1. Ein Verfahren zum Herstellen eines flexiblen Schlauchs (11) mit darin enthaltener Röhre, wobei eine Röhre (12) in einen Schlauch (1) eingefügt und damit verbunden ist,
wobei eine Verbindungsdüseneinheit (22), die in der Lage ist, kontinuierlich einen ersten Schritt zum Aufbringen eines Haftmittels (13) auf eine innere Oberfläche des Schlauchs (1) oder auf eine äußere Oberfläche der Röhre (12) und einen Schritt zum Drücken der Röhre (12) gegen den Schlauch (1) auszuführen, um die Röhre (12) mit dem Schlauch (1) zu verbinden, in den Schlauch (1) eingefügt ist; und
wobei die Verbindungsdüseneinheit (22) den ersten Schritt und den zweiten Schritt ausführt, um die Röhre (12) mit dem Schlauch (1) zu verbinden, während sie sich relativ zu dem Schlauch (1) von einem Ende zu dem anderen Ende des Schlauchs (1) bewegt.

2. Ein Verfahren gemäß Anspruch 1, bei dem die Verbindungsdüseneinheit (22) und die Röhre (12) gleichzeitig in den Schlauch eingefügt werden und nachfolgend, während nur die Verbindungsdüseneinheit (22) aus dem Schlauch (1) kommt, die Verbindungsdüseneinheit (22) ein Haftmittel (13) durch eine Düsenöffnung (221) ausstößt, die in einem Endabschnitt der Verbindungsdüseneinheit (22) gebildet ist, und die Röhre (12) gegen den Schlauch (1) mit einer Röhrendrückeinrichtung (222) drückt, die in dem Endabschnitt der Verbindungsdüseneinheit (22) vorgesehen ist.

3. Ein Verfahren gemäß Anspruch 1, bei dem, während die Verbindungsdüseneinheit (22) sich relativ zu dem Schlauch (1) in einer Richtung entlang einer Achse des Schlauchs (1) bewegt, der Schlauch (1) auf seiner Achse relativ zu der Verbindungsdüseneinheit (22) so gedreht wird, dass eine Röhrenverbindungsposition in einer Umfangsrichtung des Schlauchs (1) variiert, wenn eine Position in einer Längsrichtung des Schlauchs (1) variiert.

4. Eine Vorrichtung zum Herstellen eines in einer Röhre enthaltenem, flexiblen Schlauchs (11) mit einer Röhre (12), die in einen Schlauch (1) eingefügt und damit verbunden ist, wobei die Vorrichtung folgende Merkmale aufweist:
eine Verbindungsdüseneinheit (22), die in einen Schlauch (1) eingefügt sein kann und die in einem Endabschnitt eine Röhrendrückeinrichtung (222) zum Drücken einer Röhre (12) gegen eine innere Oberfläche des Schlauchs (12) und eine Düsenöffnung (221) aufweist, durch die ein Haftmittel (13) ausgestoßen wird;
eine Klemme (25) zum Halten eines Schlauchs (1); und
einen Relativ-Bewegungsmechanismus zum Bewegen der Verbindungsdüseneinheit (22) und der Klemme (25) in einer Richtung entlang einer Achse des Schlauchs (1) relativ zueinander.

5. Eine Vorrichtung gemäß Anspruch 4, die ferner eine Röhrenhalteeinrichtung aufweist zum temporären Halten einer Röhre (12) an die Verbindungsdüseneinheit (22),
wobei die Röhrendrückeinrichtung (222) näher an einem Ende der Verbindungsdüseneinheit (22) angeordnet ist, das ein vorderes Ende ist, wenn die Verbindungsdüseneinheit (22) in den Schlauch (1) eingefügt ist, als die Düsenöffnung (221).

6. Eine Vorrichtung gemäß Anspruch 4, die ferner einen Relativ-Drehmechanismus aufweist zum Drehen der Klemme (25) zum Halten des Schlauchs (1) und der Verbindungsdüseneinheit (22) um die Achse des Schlauchs (1) relativ zueinander; und
eine Relativ-Drehsteuerung (27) zum Steuern der relativen Drehung der Klemme (25) und der Verbindungsdüseneinheit (22), während die Verbindungsdüseneinheit (22) und die Klemme (25) sich in der Richtung entlang der Achse des Schlauchs (1) relativ zueinander bewegen.

## Revendications

1. Procédé de production d'un tuyau flexible à tube incorporé (11) avec un tube (12) introduit et assemblé dans un tuyau (1),
dans lequel une unité de tuyère d'assemblage (22) qui est à même d'exécuter en continu une première étape consistant à appliquer un adhésif (13) sur une surface intérieure de tuyau (1) ou sur une surface extérieure du tube (12) et une deuxième étape consistant à pousser le tube (12) contre le tuyau (1) de manière à assembler le tube (12) avec le tuyau (1) est introduite dans le tube (1); et
dans lequel l'unité de tuyère d'assemblage (22) exécute la première étape et la deuxième étape pour assembler le tube (12) avec le tuyau (1) tandis qu'elle se déplace par rapport au tuyau (1) d'une extrémité à l'autre extrémité du tuyau (1).

2. Procédé selon la revendication 1, dans lequel l'unité de tuyère d'assemblage (22) et le tube (12) sont introduits en même temps dans le tuyau (1) et ensuite, tandis que seule l'unité de tuyère d'assemblage (22) sort du tuyau (1), l'unité de tuyère d'assemblage (22) éjecte un adhésif (13) à travers l'orifice de tuyère (221) formé dans une partie d'extrémité de l'unité de tuyère d'assemblage (22) et pousse le tube (12) contre le tuyau (1) par un moyen de poussée de tube (222) prévu dans la partie d'extrémité de l'unité de tuyère d'assemblage (22).

3. Procédé selon la revendication 1, dans lequel, tandis que l'unité de tuyère d'assemblage (22) se déplace par rapport au tuyau (1) dans une direction le long d'un axe du tuyau (1), le tuyau (1) tourne sur son axe par rapport à l'unité de tuyère d'assemblage (22) de sorte qu'une position d'assemblage de tube dans une direction circonférentielle du tuyau (1) varie au fur et à mesure que varie une position dans une direction longitudinale du tuyau (1).

4. Appareil pour produire un tuyau flexible à tube incorporé (11) avec un tube (12) introduit et assemblé dans un tuyau (1), ledit appareil comprenant:
une unité de tuyère d'assemblage (22) qui peut être introduite dans un tuyau (1) et qui comprend, dans une partie d'extrémité, un moyen de poussée de tube (222) destiné à pousser un tube (12) contre une surface intérieure du tuyau (1) et un orifice de tuyère (221) à travers lequel est éjecté un adhésif (13);
une pince (25) destinée à maintenir un tuyau (1); et
un mécanisme de mouvement relatif destiné à déplacer l'unité de tuyère d'assemblage (22) et la pince (25) l'une par rapport à l'autre dans une direction le long d'un axe du tuyau (1).

5. Appareil selon la revendication 4, comprenant par ailleurs un moyen de maintien de tube destiné à maintenir un tube (12) temporairement contre l'unité de tuyère d'assemblage (22),
dans lequel le moyen de poussée de tube (222) se situe plus près d'une extrémité de l'unité de tuyère d'assemblage (22), qui est une extrémité avant lorsque l'unité de tuyère d'assemblage (22) est introduite dans le tuyau (1), que l'orifice de tuyère (221).

6. Appareil selon la revendication 4, comprenant par ailleurs un mécanisme de rotation relative destiné à faire tourner l'une par rapport à l'autre la pince (25) pour maintenir le tuyau (1) et l'unité de tuyère d'assemblage (22) autour de l'axe du tuyau (1); et
un contrôleur de rotation relative (27) destiné à contrôler la rotation relative de la pince (25) et de l'unité de tuyère d'assemblage (22) tandis que l'unité de tuyère d'assemblage (22) et la pince (22) se déplacent l'une par rapport à l'autre dans la direction le long de l'axe du tuyau (1).
